# EUROPÄISCHE PATENTSCHRIFT

(11) **EP 3 210 865 B1**
(45) Veröffentlichungstag und Bekanntmachung des Hinweises auf die Patenterteilung: **01.04.2020**
(21) Anmeldenummer: 17154729.2
(22) Anmeldetag: 06.02.2017
(51) Int. Cl.: B62D 51/02

(54) **FLURFÖRDERZEUG MIT EINEM FAHRANTRIEB UND EINER FAHRERSTANDPLATTFORM FÜR EINE STEHENDE BEDIENPERSON**
INDUSTRIAL TRUCK WITH A DRIVE AND A DRIVER PLATFORM FOR A STANDING OPERATOR
CHARIOT DE MANUTENTION COMPRENANT UN MÉCANISME DE TRANSLATION ET UNE PLATE-FORME POUR CONDUCTEUR DEBOUT

(30) Priorität: 29.02.2016 DE 102016103533
(43) Veröffentlichungstag der Anmeldung: 30.08.2017
(73) Patentinhaber: Linde Material Handling GmbH, 63743 Aschaffenburg (DE)
(72) Erfinder: Delmas, Laurent, 86101 Chatellerault Cedex (FR); Anthoine, Pierre, 86540 Thuré (FR)
(74) Vertreter: Patentship Patentanwaltsgesellschaft mbH

(56) Entgegenhaltungen:
- EP-A1- 1 791 609
- EP-A2- 1 767 487
- DE-A1-102006 009 331
- US-A1- 2004 069 543
- US-A1- 2014 188 338

## Beschreibung

Die Erfindung betrifft ein Flurförderzeug mit einem Fahrantrieb und einer Fahrerstandplattform für eine stehende Bedienperson, wobei das Flurförderzeug mit einer Sensoreinrichtung versehen ist, mit der die Position der auf der Fahrerstandplattform stehenden Bedienperson in Fahrzeugquerrichtung erfasst wird.

Flurförderzeuge der genannten Art sind meist als Gabelhubwagen, beispielsweise Niederhubwagen oder Hochhubwagen, als Schlepper oder als Kommissionierer, beispielsweise Niederhub- oder Hochhubkommissionierer, ausgeführt. Derartige Flurförderzeuge sind im Mitfahrerbetrieb betreibbar. Für den Mitfahrerbetrieb kann eine feste oder klappbare Fahrerstandplattform vorgesehen sein, auf der sich die Bedienperson während des Betriebs des Flurförderzeugs in einer stehenden Stellung befindet.

Im Fahrbetrieb des Flurförderzeugs kann es hierbei zu einer Situation kommen, bei der die Bedienperson nicht mittig in Fahrzeugquerrichtung auf der Fahrerstandplattform steht, sondern eine Position einnimmt, in der die Bedienperson außermittig auf der Fahrerstandplattform steht, d.h. in Fahrzeugquerrichtung zu einer Fahrzeugseite beabstandet ist. Sofern bei einer derartigen außermittigen, seitlichen Position der Bedienperson eine Kurvenfahrt des Flurförderzeugs eingeleitet bzw. durchgeführt wird, kann eine für die Bedienperson unsichere Situation entstehen, da der stehenden Bedienperson keine Ausweichbereiche auf der Fahrerstandplattform für Ihre Füße zur Verfügung stehen, um durch einen breiteren Stand einen sicheren Halt auf der Fahrerstandplattform zu erhalten, insbesondere bei einer Kurvenfahrt mit einer höheren Fahrgeschwindigkeit.

Aus der US 2014/0188338 A1 ist ein als Rasenmäher oder Transportfahrzeug ausgebildetes Fahrzeug mit einem Fahrantrieb und einer Fahrerstandplattform für eine stehende Bedienperson bekannt, wobei das Fahrzeug in Abhängigkeit der Position des Schwerpunktes des Fahrers auf der Fahrerstandplattform gelenkt und gefahren wird. Um die Position des Schwerpunktes des Fahrers auf der Fahrerstandplattform zu ermitteln, ist ein Lasterkennungsmodul vorgesehen, mit dem die Lastverteilung des Fahrers auf der Fahrerstandplattform ermittelt wird. Das Lasterkennungsmodul umfasst mehrere Wiegezellen.

Der vorliegenden Erfindung liegt die Aufgabe zugrunde, ein Flurförderzeug der eingangs genannten Gattung zur Verfügung zu stellen, das hinsichtlich der Sicherheit für die Bedienperson verbessert ist.

Diese Aufgabe wird erfindungsgemäß durch die Merkmale des Patentanspruchs 1 gelöst.

Mit einer Sensoreinrichtung, mit der die seitliche Position der auf der Fahrerstandplattform stehenden Bedienperson erfasst und ermittelt werden kann, kann auf einfache Weise durch eine entsprechende Information an die Bedienperson und/oder durch eine Reaktion des Flurförderzeugs die Sicherheit für die auf der Fahrerstandplattform stehenden Bedienperson erhöht werden.

Gemäß der Erfindung erfolgt bei einer zur Fahrzeuglängsachse seitlich in Fahrzeugquerrichtung verschobenen Position der Bedienperson auf der Fahrerstandplattform ein Warnhinweis und/oder ein Eingriff in den Fahrantrieb. Durch einen Warnhinweis an die Bedienperson und/oder einen Eingriff in den Fahrantrieb kann auf einfache Weise in einer Situation, bei der die Bedienperson nicht mittig in Fahrzeugquerrichtung auf der Fahrerstandplattform steht, sondern eine Position einnimmt, in der die Bedienperson außermittig auf der Fahrerstandplattform steht, d.h. in Fahrzeugquerrichtung zu einer Fahrzeugseite beabstandet ist, die Sicherheit für die Bedienperson erhöht werden.

Gemäß der Erfindung erfolgt bei einer zur Fahrzeuglängsachse seitlich in Fahrzeugquerrichtung verschobenen Position der Bedienperson auf der Fahrerstandplattform eine Begrenzung und/oder Reduzierung der Fahrgeschwindigkeit des Fahrantriebs. Hierdurch wird eine Steuerung in Form einer Reduzierung und/oder Begrenzung der Fahrgeschwindigkeit des Flurförderzeugs in Abhängigkeit von der seitlich in Fahrzeugquerrichtung verschobenen Position der Bedienperson auf der Fahrerstandplattform erzielt, was sich günstig und vorteilhaft auf die Sicherheit der Bedienperson auswirkt.

Gemäß einer vorteilhaften Ausgestaltungsform der Erfindung weist die Sensoreinrichtung zumindest einen Ultraschallsensor auf, dessen Erfassungsbereich sich über die Fahrerstandplattform erstreckt. Mit einem oder mehreren Ultraschallsensoren kann in einfacher, kostengünstiger und robuster Weise die Position der Bedienperson auf der Fahrerstandplattform erfasst werden.

Vorteilhafterweise weist die Sensoreinrichtung einen im Bereich der Fahrzeuglängsachse angeordneten Sensor auf. Mit einem derartigen Sensor kann in einfacher und sicherer Weise, in Fahrzeugquerrichtung gesehen, eine mittige Position der Bedienperson auf der Fahrerstandplattform erfasst werden.

Vorteilhafterweise weist die Sensoreinrichtung einen bezüglich der Fahrzeuglängsachse in Fahrzeugquerrichtung zu einer ersten Fahrzeugseite beabstandet angeordneten weiteren Sensor und einen bezüglich der Fahrzeuglängsachse in Fahrzeugquerrichtung zu einer zweiten Fahrzeugseite beabstandet angeordneten weiteren Sensor auf. Mit derartigen Sensoren kann in einfacher und sicherer Weise, in Fahrzeugquerrichtung gesehen, eine außermittige, seitliche Position der Bedienperson auf der Fahrerstandplattform erfasst werden, in der die Bedienperson in der Nähe der ersten Fahrzeugseite oder in der Nähe der zweiten Fahrzeugseite auf der Fahrerstandplattform steht.

Gemäß einer vorteilhaften Ausführungsform der Erfindung steht die Sensoreinrichtung eingangsseitig mit einer elektronischen Steuereinrichtung in Wirkverbindung und steht die elektronische Steuereinrichtung ausgangsseitig mit einer Warneinrichtung und/oder mit dem Fahrantrieb in Wirkverbindung. Mittels einer elektronischen Steuereinrichtung kann auf einfache Weise aus den Signalen der Sensoreinrichtung die mittige oder seitliche Position der Bedienperson auf der Fahrerstandplattform ermittelt werden und im Falle einer außermittigen, seitlichen Stellung der Bedienperson auf der Fahrerstandplattform die Warneinrichtung und/oder der Fahrantrieb angesteuert werden.

Zweckmäßigerweise berechnet die elektronische Steuereinrichtung aus dem Signal der Sensoreinrichtung die Position der Bedienperson auf der Fahrerstandplattform in Fahrzeugquerrichtung.

Bei dem erfindungsgemäßen Flurförderzeug kann die Fahrerstandplattform fest oder klappbar an dem Flurförderzeug angeordnet sein.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer Seitenansicht,
- Figur 2: ein erfindungsgemäßes Flurförderzeug in einer Draufsicht mit einer mittigen Position der Bedienperson,
- Figur 3: ein erfindungsgemäßes Flurförderzeug in einer Draufsicht mit einer außermittigen Position der Bedienperson und
- Figur 4: einen Schaltplan des erfindungsgemäßen Flurförderzeugs.

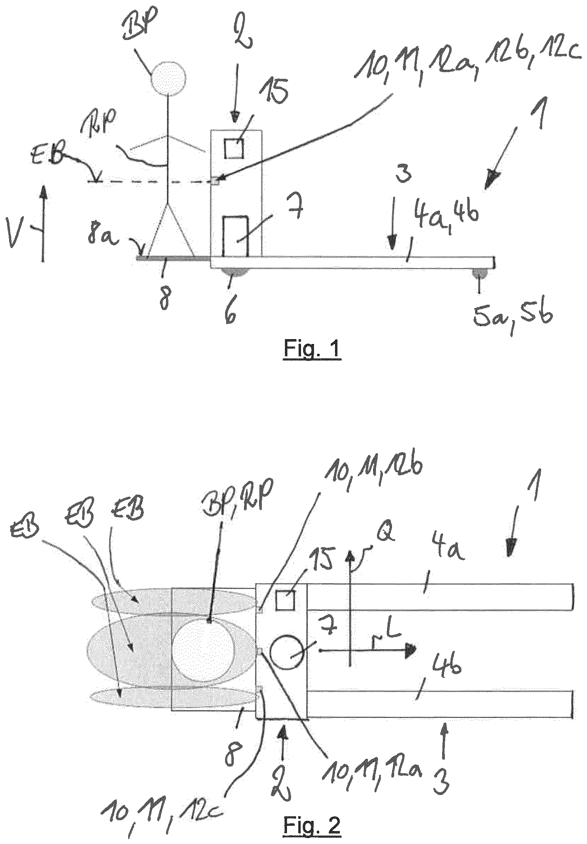

In Figur 1 ist ein erfindungsgemäßes Flurförderzeug 1 in einer Seitenansicht dargestellt. Im dargestellten Ausführungsbeispiel ist das Flurförderzeug 1 als Hubwagen, beispielsweise Gabelhubwagen, ausgebildet.

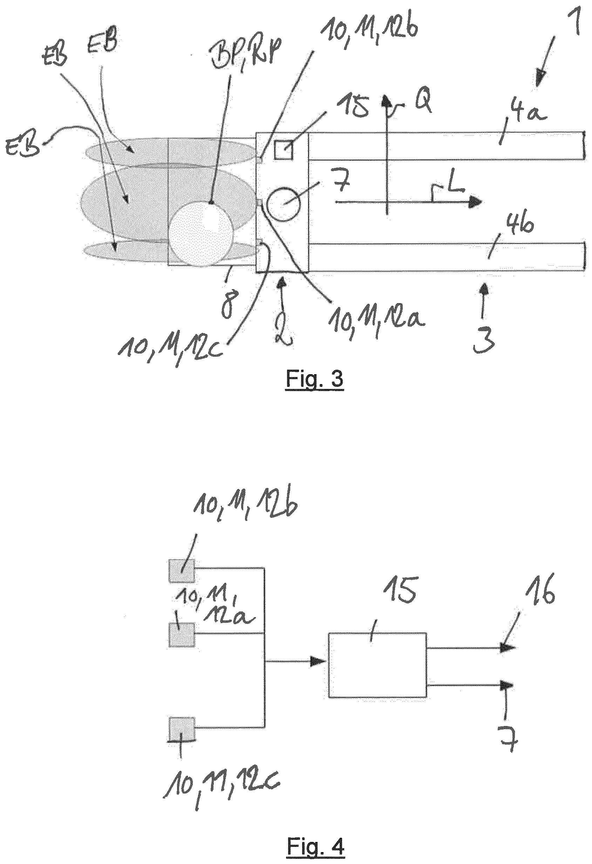

Die Figuren 2 und 3 zeigen das erfindungsgemäße Flurförderzeug 1 in einer Draufsicht.

Das Flurförderzeug 1 weist ein Antriebsteil 2 und ein relativ zu dem Antriebsteil 2 anhebbares und absenkbares Lastteil 3 auf. Das Lastteil 3 weist zwei seitlich, in Fahrzeugquerrichtung beabstandete Lastarme 4a, 4b auf, die sich mit jeweils mindestens einer Lastrolleneinrichtung 5a, 5b auf einer Fahrbahn abstützen.

Im Bereich des Antriebsteils 2 steht das Flurförderzeug 1 mit einem lenkbaren und angetriebenen Antriebsrad 6 auf der Fahrbahn auf. Zusätzlich kann am Antriebsteil 2 in Fahrzeugquerrichtung des Flurförderzeugs 1 mindestens eine seitlich beabstandete Stützrolle vorgesehen sein, mit denen sich das Flurförderzeug 1 auf der Fahrbahn abstützt.

In dem Antriebsteil 2 befinden sich die für den Antrieb des Flurförderzeugs 1 erforderlichen Aggregate, beispielsweise ein Fahrantrieb 7 zum Antrieb des Antriebsrades 6. Der Fahrantrieb 7 ist beispielsweise als elektrischer Fahrantriebsmotor ausgebildet. Zusätzlich kann ein elektrischer Pumpenmotor vorgesehen sein, der eine Hydraulikpumpe zur Versorgung einer hydraulischen Hubvorrichtung zum Anheben und Absenken des Lastteils 3 antreibt.

Das Antriebsteil 2 bzw. das an dem Antriebsteil 2 anhebbar und absenkbar angeordnete Lastteil 3 kann weiterhin ein Batteriefach für eine Traktionsbatterie aufweisen, die das elektrische Antriebssystem des Flurförderzeugs 1 mit elektrischer Energie versorgt.

Das Flurförderzeug 1 ist im Mitfahrerbetrieb von einer Bedienperson BP bedienbar und ist hierzu mit einer Fahrerstandplattform 8 versehen, auf der sich im Betrieb des Flurförderzeugs 1 die Bedienperson BP in einer stehenden Stellung befindet. Im dargestellten Ausführungsbeispiel ist die Fahrerstandplattform 8 als Fahrerstandplattform für eine stehende Bedienperson BP ausgebildet, auf der im Betrieb des Flurförderzeugs 1 die Bedienperson BP steht. Die Fahrerstandplattform 8 kann fest oder klappbar an dem Flurförderzeug 1 angeordnet sein.

Das Flurförderzeug 1 ist erfindungsgemäß mit einer Sensoreinrichtung 10 versehen, mit der die Position der auf der Fahrerstandplattform 8 stehenden Bedienperson BP in Fahrzeugquerrichtung Q erfassbar und somit ermittelbar ist.

Im dargestellten Ausführungsbeispiel umfasst die Sensoreinrichtung 10 zumindest einen Ultraschallsensor 11. Der Ultraschallsensor 11 weist einen Erfassungsbereich EB auf, der sich - in Längsrichtung L des Flurförderzeugs 1 gesehen - über die gesamte Fahrerstandplattform 8 erstreckt.

Die Sensoreinrichtung 10 weist im dargestellten Ausführungsbeispiel einen im Bereich der Fahrzeuglängsachse L angeordneten Sensor 12a auf. Der Sensor 12a ist somit mittig in Fahrzeugquerrichtung Q angeordnet. Der Sensor 12a ist bevorzugt als Ultraschallsensor 11 ausgebildet.

Die Sensoreinrichtung 10 weist einen bezüglich der Fahrzeuglängsachse L in Fahrzeugquerrichtung Q zu einer ersten Fahrzeugseite beabstandet angeordneten weiteren Sensor 12b auf und einen bezüglich der Fahrzeuglängsachse L in Fahrzeugquerrichtung Q zu einer zweiten Fahrzeugseite, die der ersten Fahrzeugseite gegenüberliegt, beabstandet angeordneten weiteren Sensor 12c auf. Der Sensor 12b ist somit benachbart und nahe an der ersten Fahrzeugseite und der Sensor 12c benachbart und nahe an der zweiten Fahrzeugseite angeordnet. Die Sensoren 12b, 12c sind bevorzugt ebenfalls als Ultraschallsensoren 11 ausgebildet.

Die als Ultraschallsensoren 12a-12c ausgebildeten Sensoren 11a-11c ermöglichen es, durch Reflexion der Ultraschallwellen an der Bedienperson BP die Position der auf der Fahrerstandplattform 8 stehenden Bedienperson BP in Fahrzeugquerrichtung Q zu erfassen.

Die Erfassungsbereiche EB der Sensoren 12a-12c sind im dargestellten Ausführungsbeispiel, wie in den Figuren 2 und 3 ersichtlich ist, jeweils in Fahrzeugslängsrichtung L gerichtet und - in Fahrzeugquerrichtung Q gesehen - parallel zueinander angeordnet. Die Erfassungsbereiche EB der Sensoren 12a-12c sind im dargestellten Ausführungsbeispiel elliptisch oder keulenartig ausgebildet.

Die Sensoreinrichtung 10 ist in vertikaler Richtung V von der Fahrerstandplattform 8 nach oben beabstandet. Bevorzugt ist die Sensoreinrichtung 10 in vertikaler Richtung V von der Fahrerstandplattform 8 nach oben derart beabstandet, dass die Erfassungsbereiche EP in vertikaler Richtung V auf Höhe des Rumpfes RP der auf der Fahrerstandplattform stehenden Bedienperson BP angeordnet sind. Die Erfassungsbereiche EP sind bevorzugt - in vertikaler Richtung V gesehen - zu einer Standfläche 8a der Fahrerstandplattform 8 parallel angeordnet, wie aus der Figur 1 ersichtlich ist.

Befindet sich - wie in der Figur 2 dargestellt - die Bedienperson BP mittig zur Fahrzeuglängsachse L auf der Fahrerstandplattform 8, steht die Bedienperson BP nur im Erfassungsbereich des Sensors 12a, der ein entsprechendes Signal liefert.

Befindet sich - wie in der Figur 3 dargestellt - die Bedienperson BP außermittig zur Fahrzeuglängsachse L auf der Fahrerstandplattform 8, beispielsweise auf der zweiten Fahrzeugseite, steht die Bedienperson BP im Erfassungsbereich des Sensors 12c, der ein entsprechendes Signal liefert. Zusätzlich kann hierbei die Bedienperson BP noch im Erfassungsbereich des Sensors 12a stehen, der ein entsprechendes Signal liefert.

Befindet sich die Bedienperson BP außermittig zur Fahrzeuglängsachse L auf der Fahrerstandplattform 8, beispielsweise auf der ersten Fahrzeugseite, steht die Bedienperson BP im Erfassungsbereich des Sensors 12b, der ein entsprechendes Signal liefert. Zusätzlich kann hierbei die Bedienperson BP noch im Erfassungsbereich des Sensors 12a stehen, der ein entsprechendes Signal liefert.

Die Sensoreinrichtung 10, die die Sensoren 12a-12c aufweist, steht - wie in der Figur 4 näher dargestellt ist - eingangsseitig mit einer elektronischen Steuereinrichtung 15 in Wirkverbindung.

Die elektronische Steuereinrichtung 15 kann aus dem Signal der Sensoreinrichtung 10 die Position der Bedienperson BP auf der Fahrerstandplattform 8 in Fahrzeugquerrichtung Q berechnen, beispielsweise aus der Laufzeit der reflektierten Ultraschallwellen.

Die elektronische Steuereinrichtung 15 steht ausgangsseitig mit einer Warneinrichtung 16 und/oder dem Fahrantrieb 7 in Wirkverbindung. Die Warneinrichtung 16 kann als akustische Warneinrichtung zur Ausgabe eines akustischen Warnsignals und/oder als optische Warneinrichtung zur Ausgabe eines optischen Warnsignals ausgebildet sein.

Die elektronische Steuereinrichtung 15 ist derart ausgebildet, dass bei einer zur Fahrzeuglängsachse L seitlich in Fahrzeugquerrichtung Q verschobenen Position der stehenden Bedienperson BP auf der Fahrerstandplattform 8, wie in der Figur 3 dargestellt ist, ein Warnhinweis an der Warneinrichtung 16 und/oder ein Eingriff in den Fahrantrieb 7 des Flurförderzeugs 1 erfolgt.

Der Eingriff in den Fahrantrieb 7 erfolgt bevorzugt derart, bei einer zur Fahrzeuglängsachse L seitlich in Fahrzeugquerrichtung Q verschobenen Position der stehenden Bedienperson BP auf der Fahrerstandplattform 8, wie in der Figur 3 dargestellt ist, eine Begrenzung und/oder Reduzierung der Fahrgeschwindigkeit des Fahrantriebs 7 erfolgt. Die Fahrgeschwindigkeit wird hierbei bevorzugt von der Bedienperson BP durch Betätigen eines entsprechenden Sollwertgebers, beispielswiese eines Fahrgeschwindigkeitsgebers, vorgegeben. Sofern von der Steuereinrichtung 15 eine zur Fahrzeuglängsachse L seitlich in Fahrzeugquerrichtung Q verschobenen Position der Bedienperson BP auf der Fahrerstandplattform 8 ermittelt wird, erfolgt somit eine Begrenzung und/oder Reduzierung der von der Bedienperson BP durch Betätigen des Sollwertgebers vorgegebenen Fahrgeschwindigkeit.

Sofern die elektronische Steuereinrichtung 15 eine mittig zur Fahrzeuglängsachse L auf der Fahrerstandplattform 8 befindliche Position der stehenden Bedienperson BP ermittelt, wie in der Figur 2 dargestellt ist, erfolgt kein Warnhinweis an der Warneinrichtung 16 und/oder kein Eingriff in den Fahrantrieb 7 des Flurförderzeugs 1. Sofern von der Steuereinrichtung 15 somit eine mittig zur Fahrzeuglängsachse L auf der Fahrerstandplattform 8 befindliche Position der stehenden Bedienperson BP ermittelt wird, erfolgt somit keine Begrenzung und/oder keine Reduzierung der von der Bedienperson BP durch Betätigen des Sollwertgebers vorgegebenen Fahrgeschwindigkeit.

Mit der erfindungsgemäßen Erfassung der seitlichen Position der auf der Fahrerstandplattform 8 stehenden Bedienperson BP und der Steuerung der Reduzierung und/oder der Begrenzung der Fahrgeschwindigkeit des Fahrantriebs 7 des Flurförderzeugs 1 in Abhängigkeit von der seitlichen Position der Bedienperson BP kann die Sicherheit für die auf der Fahrerstandplattform 8 befindliche Bedienperson BP verbessert werden.

Die Erfindung ist nicht auf die dargestellte Ausführungsform eines Flurförderzeugs 1 als Hubwagen beschränkt, sondern kann alternativ in anderen Lagertechnikflurförderzeugen mit einer Fahrerstandplattform 8 für eine stehende Bedienperson eingesetzt werden, beispielsweise in Schleppern oder Kommissionierern.

Die Erfindung ist zudem nicht auf die dargestellte Anzahl von drei Sensoren 12a-12c begrenzt. Es versteht, sich dass die Anzahl der Sensoren 12 erhöht oder verringert werden kann.

## Patentansprüche

1. Flurförderzeug (1) mit einem Fahrantrieb (7) und einer Fahrerstandplattform (8) für eine stehende Bedienperson (BP), wobei das Flurförderzeug (1) mit einer Sensoreinrichtung (10) versehen ist, mit der die Position der auf der Fahrerstandplattform (8) stehenden Bedienperson (BP) in Fahrzeugquerrichtung (Q) erfasst wird, **dadurch gekennzeichnet, dass** bei einer zur Fahrzeuglängsachse (L) seitlich in Fahrzeugquerrichtung (Q) verschobenen Position der Bedienperson (BP) auf der Fahrerstandplattform (8) ein Warnhinweis und/oder ein Eingriff in den Fahrantrieb (7) durch eine Begrenzung und/oder Reduzierung der Fahrgeschwindigkeit des Fahrantriebs (7) erfolgt.

2. Flurförderzeug nach Anspruch 1, **dadurch gekennzeichnet, dass** die Sensoreinrichtung (10) zumindest einen Ultraschallsensor (11) aufweist, dessen Erfassungsbereich (EB) sich über die Fahrerstandplattform (8) erstreckt.

3. Flurförderzeug nach Anspruch 1 oder 2, **dadurch gekennzeichnet, dass** die Sensoreinrichtung (10) einen im Bereich der Fahrzeuglängsachse (L) angeordneten Sensor (12a) aufweist.

4. Flurförderzeug nach einem der Ansprüche 1 bis 3, **dadurch gekennzeichnet, dass** die Sensoreinrichtung (10) einen bezüglich der Fahrzeuglängsachse (L) in Fahrzeugquerrichtung (Q) zu einer ersten Fahrzeugseite beabstandet angeordneten weiteren Sensor (12b) und einen bezüglich der Fahrzeuglängsachse (L) in Fahrzeugquerrichtung (Q) zu einer zweiten Fahrzeugseite beabstandet angeordneten weiteren Sensor (12c) aufweist.

5. Flurförderzeug nach einem der Ansprüche 1 bis 4, **dadurch gekennzeichnet, dass** die Sensoreinrichtung (10) eingangsseitig mit einer elektronischen Steuereinrichtung (15) in Wirkverbindung steht und die elektronische Steuereinrichtung (15) ausgangsseitig mit einer Warneinrichtung (16) und/oder mit dem Fahrantrieb (7) in Wirkverbindung steht.

6. Flurförderzeug nach Anspruch 5, **dadurch gekennzeichnet, dass** die elektronische Steuereinrichtung (15) aus dem Signal der Sensoreinrichtung (10) die Position der Bedienperson (BP) auf der Fahrerstandplattform (8) berechnet.

7. Flurförderzeug nach einem der Ansprüche 1 bis 6 **dadurch gekennzeichnet, dass** die Fahrerstandplattform (8) fest oder klappbar an dem Flurförderzeug (1) angeordnet ist.

## Claims

1. Industrial truck (1) having a traction drive (7) and a driver platform (8) for a standing operator (BP), wherein the industrial truck (1) is provided with a sensor device (10), with which the position of the operator (BP) standing on the driver platform (8) is measured in the vehicle transverse direction (Q), **characterized in that** if a position of the operator (BP) on the driver platform (8) is shifted laterally in the vehicle transverse direction (Q) relative to the vehicle longitudinal axis (L), a warning and/or an intervention in the traction drive (7) is carried out by limiting and/or reducing the speed of travel of the traction drive (7).

2. Industrial truck according to Claim 1, **characterized in that** the sensor device (10) has at least one ultrasonic sensor (11), of which the detection range (EB) extends over the driver platform (8).

3. Industrial truck according to Claim 1 or 2, **characterized in that** the sensor device (10) has a sensor (12a) arranged in the region of the vehicle longitudinal axis (L).

4. Industrial truck according to one of Claims 1 to 3, **characterized in that** the sensor device (10) has a further sensor (12b) arranged at a distance from a first vehicle side in the vehicle transverse direction (Q) relative to the vehicle longitudinal axis (L) and a further sensor (12c) arranged at a distance from a second vehicle side in the vehicle transverse direction (Q) relative to the vehicle longitudinal axis (L).

5. Industrial truck according to one of Claims 1 to 4, **characterized in that** the sensor device (10) is operatively connected to the input side of an electronic control device (15), and the output side of the electronic control device (15) is operatively connected to a warning device (16) and/or to the traction drive (7).

6. Industrial truck according to Claim 5, **characterized in that** the electronic control device (15) calculates the position of the operator (BP) on the driver platform (8) from the signal from the sensor device (10).

7. Industrial truck according to one of Claims 1 to 6, **characterized in that** the driver platform (8) is arranged on the industrial truck (1) so as to be fixed or foldable.

## Revendications

1. Chariot élévateur (1) comprenant un système d'entraînement (7) et une plate-forme de conducteur (8) destinée à un opérateur debout (BP), le chariot élévateur (1) étant pourvu d'un dispositif de détection (10) qui permet de détecter la position d'un opérateur debout (BP), se tenant sur la plate-forme de conducteur (8), dans la direction transversale (Q) du véhicule, **caractérisé en ce qu'**un avertissement et/ou une intervention dans l'entraînement (7), se traduisant par une limitation et/ou une réduction la vitesse de déplacement du système d'entraînement (7), est effectué(e) lorsque la position de l'opérateur (BP) se tenant sur la plate-forme de conducteur (8) est déplacée latéralement dans la direction transversale (Q) du véhicule par rapport à l'axe longitudinal (L) du véhicule.

2. Chariot élévateur selon la revendication 1, **caractérisé en ce que** le dispositif de détection (10) comporte au moins un capteur à ultrasons (11) dont la zone de détection (EB) s'étend sur la plateforme de conducteur (8).

3. Chariot élévateur selon la revendication 1 ou 2, **caractérisé en ce que** le dispositif de détection (10) comporte un capteur (12a) disposé au niveau de l'axe longitudinal (L) du véhicule.

4. Chariot élévateur selon l'une des revendications 1 à 3, **caractérisé en ce que** le dispositif de détection (10) comporte un autre capteur (12b) disposé à distance d'un premier côté de véhicule dans la direction transversale (Q) du véhicule par rapport à l'axe longitudinal (L) du véhicule et un autre capteur (12c) disposé à distance d'un deuxième côté de véhicule dans la direction transversale (Q) du véhicule par rapport à l'axe longitudinal (L) du véhicule.

5. Chariot élévateur selon l'une des revendications 1 à 4, **caractérisé en ce que** le dispositif de détection (10) est relié fonctionnellement du côté entrée à un dispositif de commande électronique (15) et le dispositif de commande électronique (15) est relié fonctionnement du côté sortie à un dispositif d'avertissement (16) et/ou au système d'entraînement (7) .

6. Chariot élévateur selon la revendication 5, **caractérisé en ce que** le dispositif de commande électronique (15) calcule, à partir du signal du dispositif de détection (10), la position de l'opérateur (BP) sur la plateforme de conducteur (8).

7. Chariot élévateur selon l'une des revendications 1 à 6, **caractérisé en ce que** la plateforme de conducteur (8) est disposée de manière fixe ou repliable sur le chariot élévateur (1).
